# EUROPEAN PATENT APPLICATION

(11) **EP 3 951 165 A1**
(43) Date of publication of application: **09.02.2022**
(21) Application number: 20189247.8
(22) Date of filing: 03.08.2020
(51) Int. Cl.: F03D 13/10

(54) **A SYSTEM AND METHOD FOR TRANSPORTING A WIND TURBINE TOWER**

(71) Applicant: Ørsted Wind Power A/S, 7000 Fredericia (DK)
(72) Inventor: DELAMORE, David, 2820 Gentofte (DK); FRENDESEN, Ernst, 7000 Fredericia Skaerbaek (DK)
(74) Representative: Gaunt, Thomas Derrick

(57) **Abstract**

A system and method for transporting a wind turbine tower (1). A vessel (6) is used to transport one or more towers (1) to an installation site. A cradle (4) is provided for securing the one or more towers (1) in a horizontal orientation during transportation. An upending device (5,10) is used to transition the one or more towers (1) from the horizontal orientation to a vertical orientation for subsequent connection to a foundation at the installation site.

## Description

The present invention concerns a system and method for transporting a wind turbine tower and, in particular, an offshore wind turbine tower for a wind turbine generator. The present invention particularly concerns an integrated logistic system and method for fabrication, transport and installation of offshore wind turbine towers at an offshore installation site.

In this application, the term "wind turbine tower" refers to the vertical tower which supports the nacelle, the electrical generator and the blades above the foundation. The term "wind turbine generator" is used to refer to the whole wind turbine assembly, including the tower, blades, nacelle and the electrical generator. The term "foundation" is used to refer to the structure which supports the wind turbine tower, including the body which extends into the seabed, such as a monopile or jacket or floating foundation, as well as, if present, any intermediate transition piece used to connect the tower.

The offshore wind turbine industry stems from earlier developments in onshore wind turbine technology. As such, many incumbent manufacturers within the supply chain were originally focussed on the onshore market, but now also supply parts for offshore applications. In particular, it is common for a wind turbine tower manufacturer to be based inland and manufacture towers for both onshore and offshore applications.

The wind turbine towers are relatively complex in that not only do they perform a structural role in supporting the nacelle in an elevated position, but also they house and support other components, for example secondary structures such as ladders, doorways, and internal elevators, as well as electrical parts and wiring. For example, the wind turbine tower may house the generator's switchgear for allowing isolation of the generator for servicing purposes. At the same time, wind turbine towers are usually manufactured in multiple sections, rather than as a single complete assembly. This requirement to split the tower into sections arises due to the geometric constraints of the tower fabrication facility, as well as the geometric and weight constraints for transporting towers by road.

At the port, a crane is then normally used to lift each tower section onto the deck of a transport vessel for transportation to a pre-assembly or staging harbour, which is located nearer to the installation site. At the pre-assembly harbour, a large crane is used to stack the tower sections into a vertically stacked assembly on a temporary foundation, after which the sections can be bolted together. From here, the assembled tower is then lifted by the crane of a jack-up vessel onto the jack-up vessel's deck. Once loaded, the jack-up vessel is then used to transport the assembled tower to the installation site, at which the jack-up vessel's crane will lift the tower onto the transition piece of a pre-installed foundation.

As larger wind turbines have been developed, the above transport process has, however, raised new issues. Firstly, transporting the tower sections by road limits the maximum tower diameter to around 6.5m, which in turn limits the tower's maximum size. As such, fabricating wind turbine generators with larger towers will likely need tower manufacturers with quayside access. Furthermore, as the offshore wind industry expands into new markets, it is likely that new tower manufacturer facilities will be established. These upcoming changes in the tower supply chain therefore present an opportunity to rethink the tower manufacturing and logistic process. For example, with the conventional approach described above, some harbour locations have traditionally been unsuitable as pre-assembly harbours because they are set behind bridges which limit the vertical height of assembled towers that can be transported away from them.

Furthermore, the conventional requirement to use a harbour for pre-assembly of tower sections represents a significant expense. Firstly, pre-assembly harbour leasing costs are high, not least because it is necessary to have a crane which is capable of lifting large loads more than 100m high, with assembled towers soon to have expected weights of more than 600 tons and being more than 100m tall. Furthermore, the quayside must have sufficient load bearing capacity to support such loads, which restricts the harbours that can act as a staging location.

Accordingly, there is a need for an integrated logistic concept for fabrication, transport and installation of larger next-generation towers that addresses the above issues.

According to a first aspect of the present invention, there is provided a system for transporting a wind turbine tower, the system comprising: a vessel for transporting one or more of the towers to an installation site; a cradle for securing the one or more towers in a horizontal orientation on the vessel during transportation; and an upending device for transitioning the one or more towers from the horizontal orientation to a vertical orientation for subsequent installation to a foundation at the installation site.

In this way, as towers can be transported horizontally, they may be manufactured and transported in longer sections. At the same time, the towers may be rolled onto a transport vessel, which avoids the need for large cranes at this stage, and may also reduce the quayside load requirements. The manufacturing facility or storage area can also be distanced from the quayside because the towers can be transported via SPMTs. These factors thereby reduce harbour leasing costs and may remove the need for a pre-assembly harbour altogether. In addition, installation or jack-up vessel costs may also be minimised because lower cost and faster transport vessels can be used to transport the towers to the installation site.

Furthermore, as mentioned above, wind turbine towers traditionally also contain electrical equipment such as switchgear, which may need to be transported vertically to avoid damage. However, newer wind turbine models and some foundation designs, will often have electrical equipment housed either in the nacelle or in the foundation. As such, the towers contain less sophisticated electrical equipment, thereby mitigating the risk of damage during horizontal transportation.

Moreover, the present invention allows for the manufacture and transportation of a tower in a single horizontal section. This could thereby save significant preassembly costs. In addition, fabrication costs for a single section, such as a single fully-welded cylinder, would also be lower. For example, the flanges and bolts otherwise used to connect tower sections represent not only a significant capital expense, but also add to the operating expenditure due to the need for later inspection and maintenance of these connections.

In embodiments, the upending device comprises a pivot tool for connection to the lower end of one of the towers and a lifting device attachable to the upper end of the tower for upending and lifting the top end about the lower end when connected to the pivot tool.

In embodiments, the lifting device is connectable to a crane for lifting the tower from its upper end.

In embodiments, the crane is provided on one of a jack-up vessel or a DP heavy lift vessel.

In embodiments, the system further comprises one or more transporters (SPMTs) for supporting one of the one or more towers in a horizontal orientation and for loading and moving the supported tower onto the vessel.

In embodiments, the system may involve two vessels working in a 'feeder configuration'. In this configuration, one vessel may be used for transport, such as a barge or a self-propelled transport vessel, and the other vessel may be used for upending and installation, such as a jackup or a DP heavy lift vessel. In alternative embodiments, the system may involve a single vessel working in a 'direct pick up configuration'. In such a case, a jackup or a DP heavy lift vessel may be used to both transport and subsequently upend and install the towers.

In embodiments, the lifting device comprises an engagement part for engagement with a flange on the upper end of the tower.

In embodiments, the upending device may further comprise a motion compensating device for compensating for movement of the vessel when the tower is being transitioned to a vertical orientation.

In embodiments, the cradle is a multi-purpose frame for supporting the one or more towers during onshore storage, load-out, and on the vessel during transportation.

According to a second aspect of the present invention, there is provided a method for transporting a wind turbine tower, the method comprising: securing the one or more towers to a cradle on a vessel, the cradle being configured to support the towers in a horizontal orientation; transporting the towers using the vessel to an installation site; and transitioning, using an upending device, the one or more towers from the horizontal orientation to a vertical orientation for subsequent installation to a foundation at the installation site. In this way, a methodology for the loading-out, offshore transport and installation of a wind turbine may be provided. For example, in embodiments, the one or more wind turbine towers may be loaded-out via SPMTs.

In embodiments, the method further comprises supporting one of the one or more towers in a horizontal orientation using a plurality of transporters (SPMTs); and moving and loading out the supported tower onto the vessel.

In embodiments, the step of transitioning using an upending device comprises connecting the lower end of a tower to a pivot tool; attaching the upper end of the tower to a lifting device; and upending the tower by lifting the upper end about the lower end.

In embodiments, the method further comprises connecting the lifting device to a crane for upending and lifting the tower from its upper end.

In embodiments, the crane is provided on one of a jack-up vessel or a DP heavy lift vessel.

In embodiments, the system may involve two vessels working in a 'feeder configuration'. In this configuration, one vessel may be used for transport, for example a barge or a self-propelled transport vessel, and the other vessel may be used for upending and installation, such as a jackup or a DP heavy lift vessel.

In an alternative method, a single vessel working in 'direct pick up configuration' may be used. In this configuration, the installation vessel may be used to load-out horizontal towers from the load-out harbour. The vessel then transports the towers to the installation site, before upending and installing them. In embodiments, the installation vessel may be either be a jack-up or a DP heavy lift vessel.

In embodiments, the step of attaching the top end of the tower to a lifting device comprises engaging an engagement tool on the lifting device with a flange on the tower.

Illustrative embodiments of the present invention will now be described with reference to the accompanying drawings in which:
Figure 1 shows wind turbine towers being loaded onto a transport vessel according to a first embodiment of the present invention;
Figure 2 shows a wind turbine tower being upended by an installation vessel according to the first embodiment;
Figure 3 shows an upending bucket for use in a second embodiment;
Figure 4 shows a lifting tool for use in the second embodiment; and
Figure 5 shows the lifting tool of Figure 4 through a lifting sequence.

Embodiments of the present invention allow transport of taller sections of wind turbine towers and consequently, may allow a wind turbine tower manufacturer to manufacture the wind turbine tower as a single welded item for installation directly onto the foundation. Nevertheless, the invention may also be used with the conventional practice of manufacturing the tower in a number of sections which are then assembled. Advantages of manufacturing the tower as a single section include avoiding the need for intermediate flanges and bolts, reducing sea-fastening costs, and improving logistics by opening up new harbours behind bridges and increasing feeder vessel stability. However, fabrication of single section towers would require much longer manufacturing and storage space and hence manufacturing in a plurality of sections for quayside assembly may be necessary in some circumstances. In this case, the tower sections would be assembled horizontally (in contrast to the conventional vertical assembly method) and each section may be provided with a flange to facilitate connection to an adjacent section using bolts. Alternatively, flanges without bolt holes may be provided for welding to adjacent sections. In both instances, the flanges may help to improve the cross-sectional rigidity of the tower sections during transport and upending. It is also possible that flanges are not required structurally and that a conventional welded connection may suffice.

The wind turbine tower may be manufactured at a manufacturing facility located inland or near to a port. Fabrication at a water-side facility is preferable because it avoids the need for road transportation and hence allows larger towers to be fabricated. Once manufactured, the wind turbine tower is loaded onto a transport vessel in a horizontal, rather than vertical orientation. This is achieved by providing the vessel's deck with a horizontal support cradle for supporting each wind turbine tower section along its vertical axis, thereby spreading the load. The transport vessel may be a transport barge or ship, although a jack-up vessel or DP heavy lift vessel may also be used. In embodiments, more than one different type of transport vessel may be used.

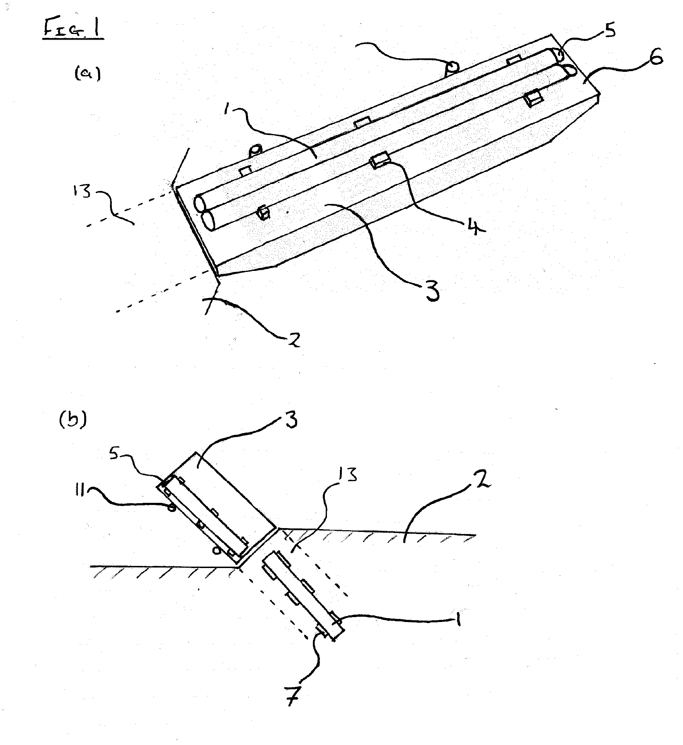

Figure 1 shows wind turbine towers 1 being loaded onto a transport vessel 6 according to a first embodiment. In this example, only two towers 1 are shown, although in practice three or more towers would be loaded per transport vessel 6. Alternatively, a single tower 1 may be loaded, along with a nacelle and a set of three blades. In this embodiment, each wind turbine tower 1 is provided as single pre-welded body which, when installed, forms a tower in its entirety. The transport vessel 6 is a barge 6.

The barge 6 is docked at a quayside 2 adjacent to a ramp 13, which is set at 45 degrees to the quay. However, it will be understood that different ramp configurations may be used, for example the ramp may be set at 90 degrees, depending on the harbour. In this embodiment, two mooring dolphins 11 are shown to facilitate the mooring of the barge 6. Each wind turbine tower 1 is loaded onto the barge's loading bed or deck 3 using a plurality of self-propelled modular transporters (SPMTs) 7, as shown in Figure 1(b). In this example, six SPMTs 7 are provided, distributed along the wind turbine tower's vertical axis. In other embodiments, different numbers of SPMTs 7 may be used. As shown in Figure 1(b), the SPMTs 7 are operated in unison to move the horizontally loaded tower 1 to the edge of the quayside 2 and then onto the aft of the adjacent deck 3 via the ramp 13. As such, the tower 1 may be effectively rolled onto the barge 6. In alternative embodiments, a crane may be used to lift the towers onto the barge 6 or other transport vessel.

As shown in Figure 1(a), once on the vessel deck 3, the tower 1 can be lowered into a cradle 4 for supporting the tower along its longitudinal axis when in the horizontal orientation. In this embodiment, the end of the tower 1 which forms the bottom of the tower once installed is fitted into an upending hinge 5, as will be described in further detail later. The tower 1 may then be further secured using sea-fastening (if required) for transport out to the installation site. Advantageously, the horizontal transport of the towers 1 provides improved vessel stability compared to vertical transport.

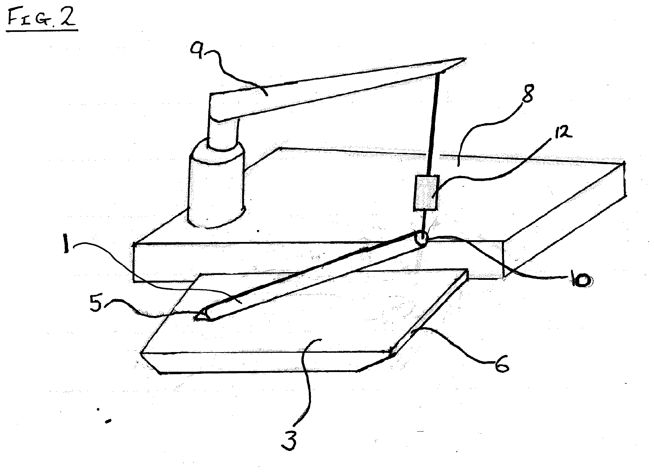

Figure 2 shows the barge 6 once it has reached the installation site. The installation vessel 8 may locate itself at the installation site in preparation, and then be fed towers 1 by the barge 6. The same barge may also be used to 'feed' nacelles and blades to the installation vessel 8. The installation vessel 6 will typically be a jack-up vessel, although for simplicity only a section of the vessel is shown in Figure 2.

The barge 6 is positioned adjacent to the installation vessel 8 to allow it to be accessed by the installation vessel's crane 9. A tower 1 is selected for installation and the crane 9 is attached, using a lifting tool 10, to the top end of the tower. As mentioned above, the lower end of the tower 1 is fitted into the upending hinge 5 which provides a pivot about which the tower 1 may be pivoted. In this embodiment, the upending hinge 5 is provided in the form of a gimbal, but other design concepts are possible to achieve the same function.

In this embodiment, a motion compensation device 12 is fitted between the crane hook and the tower lifting tool 10 to compensate for the relative movement between the crane 9 and the tower 1 when it is on the barge 6. For example, there is a risk of shock loads being applied to the crane 9, or the crane's wire being pulled too far off-vertical as the barge 6 moves in the water. In embodiments, the motion compensation device may be provided as an active or passive heave compensator.

Once the lifting tool 10 is attached, the crane 9 may then lift the end of the tower attached thereto and slew sideways until the tower 1 is vertical above the pivot, thereby upending the tower 1 from its horizontal orientation to a vertical orientation. In an alternative embodiment, the crane boom may be kept stationary, while the transport vessel 6 is moved sideways. Once this transition is complete, the tower 1 is held vertically by the crane 9 from where it may then be lifted clear of the transport vessel 6 and onto the pre-installed foundation.

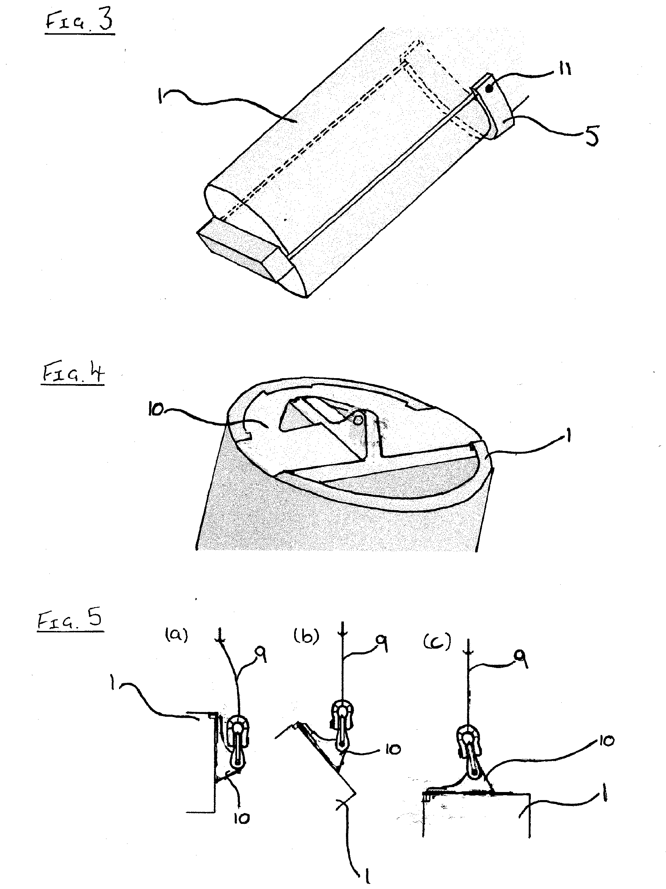

Figure 3 shows an alternative upending hinge 5 for use in a second embodiment. In this case, a bucket arrangement is used as an alternative to the gimbal shown in Figures 1 and 2. The tower 1 is received into the bucket arrangement, which has a pivot bearing 11 connected to a frame (not shown) about which the tower 1 can be pivoted during its transition to a vertical orientation. In embodiments employing this arrangement, for example, the upending hinge 5 may allow the tower to be pivoted over the edge of the vessel, thereby minimising the crane's lift height relative to the transport deck 3. It will also be understood that, rather than providing an upending device for each tower 1 stored in the support cradle 4, a single upending device 5 may be provided on the vessel, with towers 1 being individually loaded into the device before each upending operation.

Figure 4 shows an example lifting tool 10 for use in the second embodiment. As shown, the lifting tool 10 fits into the top end of the tower 1 and is operable to key into an internally projecting flange provided at the end of the tower 1.

Figure 5 shows the lifting tool 10 of Figure 4 through a lifting sequence. As shown in Figure 5(a), the lifting tool 10 is fitted to the end of the tower 1 when it is in its horizontal configuration and locked into place by operation of a keying mechanism. The crane 9 may then lift the lifting tool 10 vertically to pivot the tower 1 about the upending bucket 5, as shown in Figure 5(b). This process continues until the tower 1 reaches the vertical orientation shown in Figure 5(c).

Accordingly, with embodiments of the invention, as the towers are transported horizontally, they may be manufactured in longer sections. At the same time, the towers may be rolled onto a transport vessel, which avoids the need for large cranes at this stage, and may also reduce the quayside load requirements. The manufacturing facility or storage area can also be distanced from the quayside because the towers can be transported via SPMTs. These factors thereby reduce harbour leasing costs. In addition, installation or jack-up vessel costs may also be minimised because lower cost and faster transport vessels can be used to transport the tower sections to the installation site.

Furthermore, embodiments of the invention may potentially remove the need for a preassembly harbour entirely. For example, the manufactured towers may be shipped direct from the manufacturing site to the installation site, which may provide for significant cost savings by reducing harbor leasing costs.

Moreover, it should be noted that transporting conventional towers using a conventional feeder configuration is a very slow process. Specifically, it is typically necessary to transport the tower to the installation vessel in three separate tower sections. This is because transporting an assembled vertical tower would excessively compromise transport barge stability, and the motion of the barge in the water would also make it challenging to lift the top of an assembled tower using the installation vessel crane. At the installation site, the installation jackup vessel is then required to lift each section individually onto the jackup deck, after which the vessel must elevate itself higher using the jackup legs in order to lift the tower sections across to the foundation. By contrast, embodiments of the invention may allow a fully welded horizontal tower to be upended and lifted by the jackup vessel onto the foundation in a single step. This thereby has the potential to significantly improve installation speeds, which in turn reduces vessel and harbor leasing costs.

It will be understood that the embodiments illustrated above show applications of the invention only for the purposes of illustration. In practice the invention may be applied to many different configurations, the detailed embodiments being straightforward for those skilled in the art to implement.

For example, although in the above examples, the tower is fabricated as a single welded cylinder, the tower may instead also be assembled from a plurality of sections. For example, this might be required if the tower fabrication hall is not long enough to produce a single-piece welded tower. In this scenario, in embodiments of the invention, the tower sections may be assembled horizontally by aligning the sections on a horizontal assembly jig, prior to the assembly being loaded onto a vessel for transport to the marshalling harbor or installation site (with horizontal securing of tower sections being performed by bolting, or welding, or some other means).

Furthermore, although in the above example, the towers are transported to the installation site using a barge or transport vessel, they may also be transported using the installation vessel itself (which could be either a jackup vessel or DP heavy lift vessel). In such a scenario, the towers may be loaded-out to the installation vessel, for example by using the installation vessel's own crane to lift the towers onto its deck. In this case, a number of towers may be loaded horizontally onto the installation vessel, before then later being upended in turn at the installation site.

Moreover, in the above example, the towers are carried on the vessel in a longitudinal configuration. However, it will be understood that the towers may also be loaded onto the vessel's deck transversely. In this scenario, the ends of the towers would extend beyond the sides of the vessel, which may increase the number of towers that can be transported at any one time. Capacity may also be increased by stacking the towers 1 during transportation. For example, the design of the support cradle 4 may be developed into a multi-layered transport cradle capable of carrying two or more towers 1 at a time. In such a case, a single upending device may be provided on the vessel, with stored individual towers 1 being lifted in their horizontal orientation from the cradle 4 and loaded into the upending device for each upending operation.

Furthermore, in the above example, the towers are upended by a jackup vessel. However, it would also be possible in principle for the towers to be upended and installed by a dynamically positioned heavy lift vessel (DP HLV). Like the jackup, this vessel could either work in 'feeder configuration' (where a barge or transport vessel brings the towers to the installation vessel, which is positioned at the installation site), or in 'direct pick up configuration' (where the DP heavy lift vessel itself picks up the towers from the load-out harbor, transports them to the installation site and then upends and installs them).

Moreover, although in the above illustrative example, the motion compensation device was provided between the crane hook and the tower lifting tool, it will also be understood that a motion compensation device may further be provided between the tower upending pivot and the transport vessel, for instance in the form of a motion compensation platform.

Related to the above, there is also a risk that movement of the transport vessel could lead to the tower being hit by the vessel before it is fully lifted away. This may be addressed by a motion compensation device between the crane hook and tower lifting tool that provides a quick lift function i.e. to increase the rate of the initial lift off the vessel.

Further, it is also envisaged that a transport cradle may be provided for moving the towers onto a transport vessel using the SPMTs. In embodiments, this cradle may be provided as a multi-purpose frame for supporting the towers during onshore storage, load-out on the SPMTs, and offshore transport. Alternatively, different cradles may be used for different stages, with the towers being transferred between different cradles at the start of each stage.

## Claims

1. A system for transporting a wind turbine tower, the system comprising:
a vessel for transporting one or more of the towers to an installation site;
a cradle for securing the one or more towers in a horizontal orientation on the vessel during transportation; and
an upending device for transitioning the one or more towers from the horizontal orientation to a vertical orientation for subsequent installation to a foundation at the installation site.

2. A system according to claim 1, wherein the upending device comprises a pivot tool for connection to the lower end of each tower and a lifting tool attachable to the top end of that tower for upending and lifting the tower when connected to the pivot tool.

3. A system according to claim 2, wherein the lifting tool is connectable to a crane for lifting the top end of the tower.

4. A system according to any preceding claim, further comprising one or more transporters, SPMTs, for supporting one of the one or more towers in a horizontal orientation and for loading the supported tower onto the vessel.

5. A system according to any preceding claim, wherein a first vessel is used for transporting the one or more towers to an installation site and the upending device is provided on a second vessel

6. A system according to any preceding claim, wherein the upending device further comprises a motion compensating device for compensating for movement of the vessel when the tower is being transitioned to a vertical orientation.

7. A system according to any preceding claim, wherein the cradle is a multi-purpose frame for supporting the one or more towers during onshore storage, load-out, and on the vessel during transportation.

8. A method for transporting a wind turbine tower, the method comprising:
securing one or more wind turbine towers to a cradle on a vessel, the cradle being configured to support the towers in a horizontal orientation;
transporting the one or more towers using the vessel to an installation site; and
transitioning, using an upending device, the one or more towers from the horizontal orientation to a vertical orientation for subsequent installation to a foundation at the installation site.

9. A method according to claim 8, wherein the step of transitioning using an upending device comprises:
connecting a lower end of a tower to a pivot tool;
attaching the top end of the tower to a lifting device; and
upending the tower by lifting the top end about the lower end.

10. A method according to claim 9, further comprises connecting the lifting device to a crane for lifting the top end of the tower.

11. A method according to claim 10, wherein the crane is provided on a jack-up vessel or on a floating heavy-lift vessel.

12. A method according to any one of claim 8 to 11, further comprising the steps of:
supporting one of the towers in a horizontal orientation using one or more transporters; and
moving and loading the supported tower onto the vessel.

13. A method according to any one of claims 8 to 12, wherein a first vessel is used for transporting the one or more towers to the installation site and wherein a crane for upending the towers is provided on a second vessel

14. A method according to any one of claims 8 to 12, wherein the upending device used for transitioning the one or more towers to a vertical orientation is provided on the same vessel used for transporting the one or more towers to the installation site.

15. A method according to any one of claim 8 to 14, wherein the step of attaching the top end of the tower to a lifting device, which comprises engaging part of the lifting device with the flange on the tower.
